# EUROPEAN PATENT SPECIFICATION

(11) **EP 2 217 773 B1**
(45) Date of publication and mention of the grant of the patent: **01.02.2012**
(21) Application number: 08844920.2
(22) Date of filing: 24.10.2008
(51) Int. Cl.: E04D 7/00, B01J 35/00, C08J 7/04, C23C 26/00

(54) **A DEPOLLUTING FACING**
REINIGENDE VERKLEIDUNG
PAREMENT DÉPOLLUANT

(30) Priority: 31.10.2007 EP 07388076
(43) Date of publication of application: 18.08.2010
(73) Proprietor: ICOPAL A/S, 2730 Herlev (DK)
(72) Inventor: MADEC, Yves, F-41100 Vendôme (FR); VERDEBOUT, Renaud, B-5030 GEMBLOUX (BE)
(74) Representative: Sundien, Thomas
(86) International application number: PCT/EP2008/064438
(87) International publication number: WO 2009/056492

(56) References cited:
- WO-A-01/71121
- GB-A- 2 425 075

## Description

The present invention relates to a depolluting product, preferably for roofing or facing purposes such as façades and the like, wherein the product, in a simple, efficient and permanent manner, exhibits air depolluting properties.

According to one aspect of the present invention, an air depolluting facing for a building structure is provided. The facing comprise inter alia of a first layer constituting a bituminous membrane and a second layer defining a surface of the facing and including a plurality of granules. The first layer acts as base for said granules which each comprise at least 50 percent by weight anatase titanium dioxide.

### Background

One of today's serious threats to our environment is the emission of NOx (nitrogen oxide) and SOx (sulphur oxides).

NOx is the generic term for a group of highly reactive gases, all of which contain nitrogen and oxygen in varying amounts. Many of the nitrogen oxides are colourless and odourless. One common pollutant is however nitrogen dioxide (N2), which along with particles in the air, often can be seen as a reddish-brown layer over many urban areas.

NOx is formed mainly when fuel is burned at high temperatures, as in a combustion process. The primary sources of NOx are motor vehicles, electric utilities, and other industrial, commercial, and residential sources which bum fuels. The division of the sources are roughly: utilities: 27%, motor vehicles: 49%, industrial/commercial/residential: 19%, other sources: 5%.

When NOx is emitted into the air, it reacts with water and other compounds to form various acidic compounds, fine particles, and ozone, and the pollutants can remain in the air for days or even years. Prevailing winds can transport them hundreds of kilometres, often across states and national borders.

The pollutants may fall to the earth in either a wet form (rain, snow, and fog) or a dry form (gases and particles). Impacts include impaired air quality, damage to public health, degradation of visibility, acidification of lakes and streams, harm to sensitive forest and coastal ecosystems, accelerated decay of materials, paints, and cultural artefacts such as buildings, statues, and sculptures nationwide and the like.

NO₂ is one of the most prominent air pollutants and a poison by inhalation.

Manufacturers of NOx and SOx emitting products, such as manufactures of motor vehicles and burning stoves are devoted in developing products with the lowest possible emission of NOx and SOx. However, a strong need for an efficient depolluting initiative is evident.

It has been found that titanium dioxide, or TiO₂. particularly in the anatase form, under the exposure of UV light, exhibit excellent photocatalytic properties in removing NOx and other pollutants from the air. Trials with this material applied as a layer on outdoor buildings and in streets and highway paving are on-going with promising results.

The anatase form is one of seven mineral forms of titanium dioxide, two other common forms being brookite and rutile titanium dioxide.

Titanium dioxide is thus added to paints, cements, windows, tiles, or other products for sterilizing, deodorizing and anti-fouling properties and is also used as a hydrolysis catalyst.

As TiO₂ is exposed to UV light, it becomes increasingly hydrophilic; thus, it can be used for anti-fogging coatings or self-cleaning windows.

TiO₂ incorporated into outdoor building materials, such as paving stones, may reduce concentrations of airborne pollutants such as volatile organic compounds (VOC), nitrogen oxides (NOx) and sulphur oxides (SOx).

The European Patent 0 576 120 B1 discloses a method of preparing anatase titanium dioxide having a high surface area.

The European Patent 0 919 667 B1 suggests a NOx removing pavement structure e.g. for sideways or roadways. The structure comprises a concrete layer, asphalt or paving layer and a surface layer, wherein the surface layer consists of a mixture of cement, aggregate, and titanium dioxide powder.

The United Kingdom patent application 2 425 075 A suggests a NOx and SOx removing concrete roof tile or wall cladding element, wherein a photocatalytic topmost layer capable of oxidizing pollutants is provided.

The above prior art documents mode of action can briefly be outlined as:
- the pollutant contacts the photocatalyst.
- the pollutant is oxidized to an acidic intermediate product with UV light as the source of energy,
- the acidic intermediate product is neutralized with the alkaline components of the concrete base material holding the photocatalyst and
- the final products, soluble calcium nitrate or sulphate are washed away, either by rainfall or by sprinkling.

Common for EP 0 919 667 B1 and GB 2 425 075 A are that the layer holding the photocatalyst is a concrete layer acting as a matrix for the photocatalyst, and that the calcium carbonate (or similar) of the matrix actively takes part in the depolluting process.

The German patent 102 12 591 B4 suggest a bituminous covering comprising a coating of titanium dioxide as contact surface for purification of air- or waterborne pollutants. The coating consists of a bitumen emulsion suspending hydrophobicized titanium dioxide, hydrophobicized hydroxides, oxides and/or sulfates of alkali metals.

Again, the layer holding the titanium dioxide actively takes part in the depollution process.

WO 01/71121 A1 teaches a method of preventing algae growth on building materials incl. granules made up from a coating composition applied to substrates or cores. The coating composition includes a silicate binder and a plurality of photocatalytic particles, in particular TiO₂. The silicate binder functions as a bonding agent to establish the coating on the substrate. A plurality of photocatalyst particles are dispersed throughout the silicate binder. The particles are included in an amount that provides sufficient distribution of the particles in the resulting coating. The incorporation of the granules into roofing materials prevents algal growth on buildings.

The present invention seeks to provide a depolluting product, preferably for roofing or facing purposes where the product, in a simple, efficient and permanent manner, exhibits air depolluting properties by means of granules comprising anatase titanium dioxide applied into or onto a base acting as a physical membrane or building component and the like.

### The figures

Figure 1 shows a schematic depolluting roofing, wherein a support or a base is covered by a layer of granules comprising anatase TiO₂.
Figure 2 shows a schematic setup of a chamber wherein the depolluting properties of various roofing elements is tested.
Figure 3 schematically illustrates a granulation plant.
Figure 4 shows a picture of a portion of a granule.

### Detailed description with reference to the figures

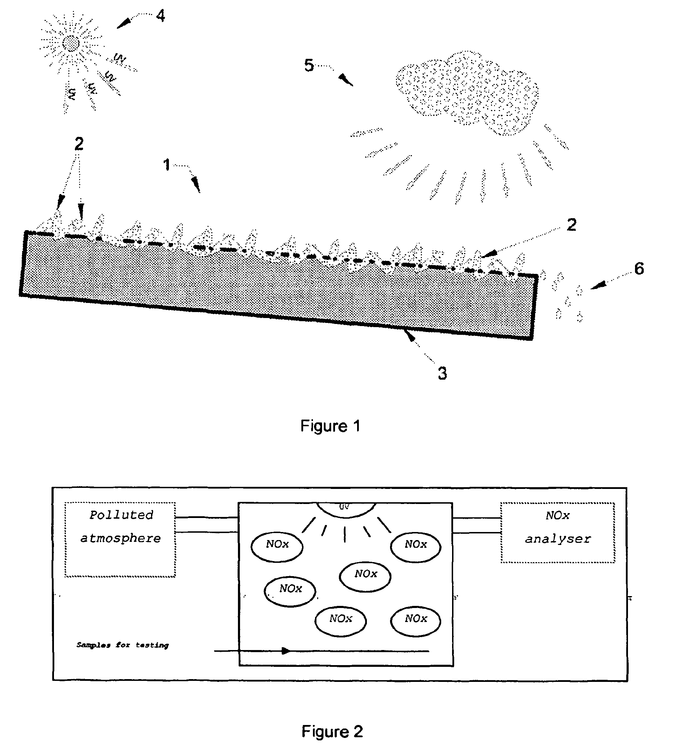

Figure 1 shows a depolluting roofing product arranged with a slight inclination, which equally could have been a vertical or a horizontal facing or a tile or similar.

A first layer 3, acting as a support or a base, is covered by a layer of granules 2 comprising TiO₂.

The air-depolluting mode of action according to the present invention can briefly be outlined as:
- the airborne pollutant 5 contacts granules 2 comprising anatase titanium dioxide acting as a photocatalyst and defining the upper surface of the facing 1,
- the pollutant is oxidized to an acid with UV light 4 as the source of energy, and
- the final product 6 is washed away, either by rainfall or by sprinkling.

In this process there is no neutralization of the resulting acids.

Depending on the airborne pollutant, the final product may be carbon dioxide, nitric acid or sulphuric acid or the like.

If the granules 2 contain calcium carbonate, e.g. in the form of limestone or equivalent, the depolluting process will be similar to that of the processes according of the prior art described above; the acid will be an intermediate product which will be neutralized by means of the calcium carbonate.

The final product of the depolluting process will then be soluble calcium nitrate or sulphate, which also may be washed away, either by rainfall or by sprinkling. (The acids will be an intermediate product which will be neutralized with the calcium carbonate).

The depolluting efficiency of the facing is estimated to lie in the range of 2.3 g/m2/year of NO with the NO concentration of the atmosphere being in the range of 200 ppb, and 0.6g/m²/year of NO₂ with the NO₂ concentration of the atmosphere being in the range of 50ppb.

Considering the pluviometry in the European countries, the concentration of acid is too weak to be dangerous. In France for example, an average pluviometry is in the range of 800 I/m²/year, which results in an acidic concentration of only about 0.003 - 0.004 g/L; which lies substantially below local regulations.

According to one embodiment of the present invention, a bituminous membrane, such as a flexible web impregnated with bitumen, constitute a first layer 3 acting as a physical membrane and as a carrier for a photocatalytic layer consisting of granules 2.

The granules 2 may be applied during manufacturing of the bituminous membrane e.g. by means of pressing or calandering the granules 2 onto the hot surface of the bituminous membrane, such that the granules 2 are somewhat embedded in said bituminous membrane.

The membrane may be handled, stored, transported, rolled and installed equivalent to any current bituminous membrane.

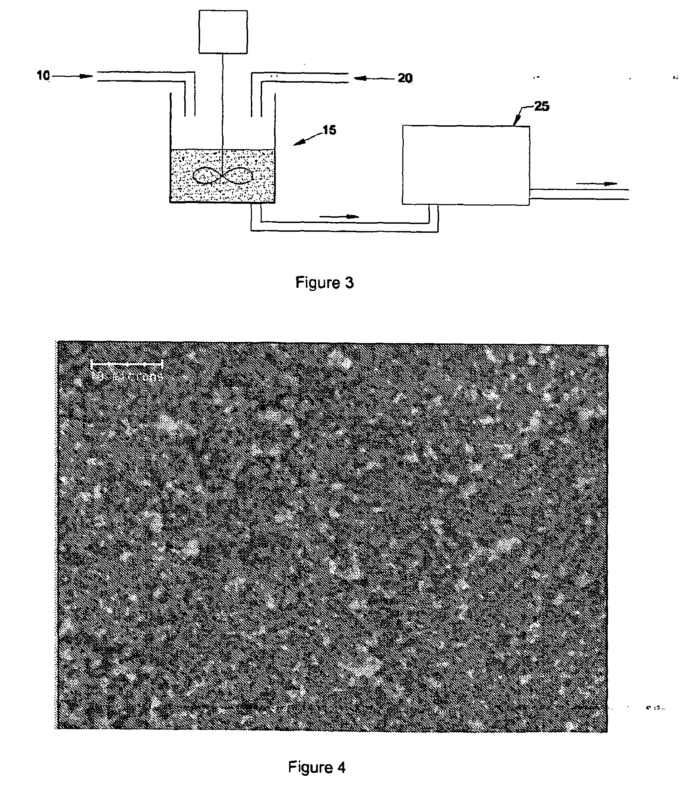

The granules 2 applied to the facing according to the present invention may be obtained by a granulation process as schematically illustrated in figure 3.

Anatase TiO₂ and other components such as calcium carbonate, in the form of powder, are introduced to a granulation apparatus 15 via a conduit 10.

The anatase TiO₂ powder is preferably substantially pure, or has purity in the range of 98.5%.

A controlled volume of a liquid binder is added, via conduit 20, such that the anatase TiO₂ powder granulates under agitation caused by means for agitation provided within the granulation apparatus 15.

The binder may constitute for example a phosphate binder or a silicate binder.

Subsequent the granulation process, the granules are heated or cooked at a temperature of about 300°C - 450°C within a heating or cooking device 25.

The granules may be sieved in order to obtain smaller granules 2 with a size, determined by sieving, in the range of 0.03 mm to approximately 1.6 mm., however preferably in the range of 0.8-1.2 mm.

The granules resulting from the above process possess, due to porosity, highly extended surface areas, typically in the range of 4 to 4.5 m² per gram which typically are in excess of 10 times the area of granules made up from a core, e.g. of rock material, and coated with anatase TiO₂.

Figure 4 shows an enlarged picture of a portion of a granule prepared according to the above described process, and as can be seen in the picture, the granule constitute an open porous structure.

The average diameter, determined by sieving, of the granules 2 is preferably around 0.8-1.2 mm, primarily distributed between, but not limited to, 0.3 and 1.6 mm subsequent.

Oversize granules may be milled or crushed in order to obtain the desired size.

The expenditure of the granules 2 may lie in the range of 1 - 2 kg per square meter /m² per plane facing.

The abovementioned extreme surface areas of the granules contribute to the good air-depolluting efficiency.

The granules are preferably essentially homogeneous, that is the granules are not provided with a core of non photocatalytic material, the anatase titanium dioxide being substantially uniformly distributed throughout each granule.

It will of course be possible to combine any of the above embodiments and aspects.

A concomitant advantageous effect of the air depolluting facing according to the present invention is that the photocatalytic effect of the TiO₂ which is implemented into the surface of the facing neutralizes and/or fights organic growth, such as algae growth and the like, on the surface of the facing.

As titanium dioxide posses high reflectance, the air depolluting facing according to the present invention may find alternative applications and/or benefits. One example could be application of the air depolluting facing on roofs or façades where means for absorption of solar energy is provided such that the means for absorption is exposed to both direct radiation and radiation reflected from the air depolluting facing.

The TiO₂ granules may be provided with a surface treatment comprising silicon oil or equivalent The treatment may improve the adherence or attachment of the granule to the first layer 3.

The invention is not in any way limited to embodiments wherein the granules are build up from anatase titanium dioxide and a binder. The invention will show similar effect using granules of 100% anatase titanium dioxide.

Conclusively, depollution of air by means the application of a facing according to the above is achieved.

### Test results

The depolluting characteristics of anatase titanium dioxide demonstrate unquestionable efficiency emphasized by substantial testing with excellent results.

The test configuration for the anatase titanium dioxide incorporated in a bituminous depolluting roofing incl. results are disclosed below:

Several tests have been carried out, one series of tests being performed in a simulation chamber established according to figure 2.

The simulation chamber will be able to put NOx polluted atmosphere in contact with materials prepared for testing. VOC or SOx polluted atmospheres could also be introduced into the simulation chamber.

In the example hereafter, a source of NOx polluted atmosphere is connected to a chamber wherein test samples are situated. Upon placing a test sample (200 mm × 200 mm) in the chamber, the NOx polluted atmosphere is, in a controlled manner, filled into the chamber whereby a predetermined concentration of NOx is reached.

An energy source in the form of UV-light is provided, and the chamber is irradiated for 7 hours.

Under irradiation, measurements of NOx (NO + NO₂) levels are carried out.

Three samples are provided for testing, which are tested one after the other and under same conditions. The samples are:
1. Bituminous membrane covered by granules which contains no TiO₂
2. Bituminous membrane covered by standard white coloured granules containing TiO₂ in external coating.
3. Bituminous membrane covered by granules made of TiO₂

Samples 1 and 2 represent bituminous membranes lying outside the scope of the present invention.

The characteristics of the tests are:
- the chamber is a cubic with an edge of 650 mm.
- the walls of the chamber are covered with a film of Teflon to minimize adsorption of NOx gas on the walls.
- the chamber are irradiated by UV-light with following specifications : 2 W/m² of UV-B and 4 W/m² of UV-A
- the NOx concentration of the atmosphere, which is introduced into the chamber, is about 250 ppb (345.3 µg/m³) of which 50 ppb (95.7 µg/m³) is NO₂. The concentrations are comparable to the annual average of concentrations measured on Paris's ring.
- all the measurements are done at atmospheric pressure, and at normal ambient temperature.

### Operations:

- the chamber is filled with polluted atmosphere following specifications of above
- the chamber is irradiated with UV-light for 7 hours.
- measurements of NOx (NO + NO₂) level is carried out during and after the 7 hours of irradiation.

### Results:

1. Bituminous membrane covered by granules which contains no TiO₂
   Result: No effect of NOx reduction recorded.
2. Bituminous membrane covered by standard white coloured granules containing TiO₂ in external coating.
   Result: Slow decrease of NOx with a final reduction of abt. 40% of the initial concentration.
3. Bituminous membrane covered by granules made of TiO₂ Result: NOx reduction is close to 100% after only 3 hours of irradiation. The effect is permanent meaning that e.g. 7 hours on same sample leads to same efficiency.
   Efficiency on NO: 2.3 g/m²/year
   Efficiency on NO₂: 0.6 g/m²/year
   Additional samples have been tested and presence of calcium carbonate or similar, silicone oil or similar, does not affect the efficiency of the membrane significantly.
   Aged samples (abt. 6 months natural exposure) have been tested and the measured depolluting efficiency on NOx is substantially unchanged.

Another series of test has been carried out according to the above principles, however under alternative parameters.

The characteristics of the test are:
- the chamber is a cubic with an edge of 1500 mm.
- the walls of the chamber are covered with a film of Teflon to minimize adsorption of NOx gas on the walls.
- the chamber is irradiated by solar radiation during shiny weather.
- the NOx concentration of the atmosphere, which is introduced into the chamber, is about 60 ppb (81.5 µg/m³) of which 10 ppb (19.1 µg/m³) is NO₂.
- all the measurements are done at atmospheric pressure, and at normal ambient temperature.

### Operations:

- the chamber is filled with polluted atmosphere following specifications of above.
- the chamber is irradiated with solar radiation for 5 hours.
- measurements of NOx (NO + NO₂) level is carried out during and after the 5 hours of irradiation.

### Results

1. Bituminous membrane covered by standard white coloured granules containing TiO₂ in external coating:
   efficiency on NO: 1.5g/m²/year; efficiency on NO₂ : 0.1g/m²/year
2. Bituminous membrane covered by granules made of TO₂
   efficiency on NO: 1.7g/m²/year; efficiency on NO₂: 0.1g/m²/year

It should be emphasized that the term "comprises/comprising/comprised of" when used in this specfication is taken to specify the presence of stated features, integers, steps or components but does not preclude the presence or addition of one or more other features, integers, steps, components or groups thereof.

## Claims

1. An air depolluting facing for a building structure, said facing comprising inter alia:
- a first layer (3) constituting a bituminous membrane,
- a second layer defining a surface of said facing and including a plurality of granules (2),
where said first layer (3) acts as base for said granules (2) **characterized in that** said granules (2) each comprise at least 50 percent by weight anatase titanium dioxide.

2. A facing for a building structure according to claim 1, wherein each of said granules (2) comprise 50 - 80 percent by weight anatase titanium dioxide.

3. A facing for a building structure according to claim 1, wherein each of said granules (2) comprise 70 - 80 percent by weight anatase titanium dioxide.

4. A facing for a building structure according to any of the preceding claims wherein each of said granules (2) further comprise calcium carbonate.

5. A facing for a building structure according to any of the preceding claims wherein each of said granules (2) further comprise a binder such as a phosphate binder or a silicate binder for binding said titanium dioxide particles.

6. A facing for a building structure according to any to the preceding claims wherein said granules (2) are applied during manufacturing of said facing by pressing or calandering said granules (2) onto a hot surface of said bituminous membrane, such that said granules (2) are somewhat embedded in said bituminous membrane.

7. A facing for a building structure according to any of the preceding claims wherein said granules (2) are coated with silicon oil such that an adherence or attachment of said granule (2) onto or into said first layer (3) is improved.

8. A facing for a building structure according to any of the preceding claims wherein said facing is furnished with about 1 - 2 kg granules (2) per plane m² of said facing.

9. A facing for a building structure according to any of the preceding claims wherein an average diameter, or sieving, of each of said granules (2) are around 0.3-1.6 mm, and preferably 0.8-1.2 mm.

10. A method of deporting air comprising applying a facing according to any of the preceding claims.

## Patentansprüche

1. Luftreinigende Verkleidung für ein Bauwerk, welche Verkleidung u.a. folgendes umfasst:
- eine erste Schicht (3), die eine bituminöse Membrane bildet,
- eine zweite Schicht, die eine Oberfläche der Verkleidung definiert und eine Mehrheit von Körnchen (2) umfasst,
wobei die erste Schicht (3) als Basis für die Körnchen (2) dient, **dadurch gekennzeichnet, dass** die Körnchen (2) jeweils mindestens 50 Gewichtsprozent Anatastitandioxid umfassen.

2. Verkleidung für ein Bauwerk nach Anspruch 1, wobei jedes der Körnchen (2) 50-80 Gewichtsprozent Anatastitandioxid umfasst.

3. Verkleidung für ein Bauwerk nach Anspruch 1, wobei jedes der Körnchen (2) 70-80 Gewichtsprozent Anatastitandioxid umfasst.

4. Verkleidung für ein Bauwerk nach irgendeinem der vorhergehenden Ansprüche, wobei jedes der Körnchen (2) weiter Kalziumcarbonat umfasst.

5. Verkleidung für ein Bauwerk nach irgendeinem der vorhergehenden Ansprüche, wobei jedes der Körnchen (2) weiter einen Binder wie z.B. einen Phosphatbinder oder einen Silikatbinder zum Binden der Titandioxidpartikel umfasst.

6. Verkleidung für ein Bauwerk nach irgendeinem der vorhergehenden Ansprüche, wobei die Körnchen (2) während der Herstellung der Verkleidung durch Pressen oder Kalandrieren der Körnchen (2) auf eine heiße Oberfläche der bituminösen Membrane aufgebracht werden, so dass die Körnchen (2) einigermaßen in die bituminöse Membrane eingebettet werden.

7. Verkleidung für ein Bauwerk nach irgendeinem der vorhergehenden Ansprüche, wobei die Körnchen (2) mit Silikonöl belegt sind, so dass die Anhaftung oder Bindung der Körnchen (2) auf oder in der ersten Schicht (3) verbessert wird.

8. Verkleidung für ein Bauwerk nach irgendeinem der vorhergehenden Ansprüche, wobei die Verkleidung mit etwa 1-2 kg Körnchen (2) pro Ebene m² der Verkleidung versehen wird.

9. Verkleidung für ein Bauwerk nach irgendeinem der vorhergehenden Ansprüche, wobei ein durchschnittlicher Durchmesser, oder Siebung, jedes der Körnchen (2) etwa 0,3-1,6 mm und vorzugsweise 0,8-1,2 mm ist.

10. Verfahren zum Reinigen von Luft, umfassend Aufbringen einer Verkleidung nach irgendeinem der vorhergehenden Ansprüche.

## Revendications

1. Parement dépolluant d'air pour une structure de bâtiment, ledit parement comprenant entre autre:
- une première couche (3) constituant une membrane bitumineuse,
- une deuxième couche définissant une surface dudit parement et comprenant une pluralité de granulés (2),
la première couche (3) agissant en tant qu'une base pour lesdits granulés (2), **caractérisé en ce que** chacun desdits granulés (2) comprend au moins 50 pourcent en poids de dioxyde de titane anatase.

2. Parement d'une structure de bâtiment selon la revendication 1, dans lequel chacun desdits granulés (2) comprend 50 à 80 pourcent en poids de dioxyde de titane anatase.

3. Parement d'une structure de bâtiment selon la revendication 1, dans lequel chacun desdits granulés (2) comprend 70 - 80 pourcent en poids de dioxyde de titane anatase.

4. Parement d'une structure de bâtiment selon l'une quelconque des revendications précédentes, dans lequel chacun desdits granulés (2) en outre comprend du carbonate de calcium.

5. Parement d'une structure de bâtiment selon l'une quelconque des revendications précédentes, dans lequel chacun desdits granulés (2) en outre comprend un liant tel qu'un liant silicate ou un liant phosphate pour liaison desdites particules de dioxyde de titane.

6. Parement d'une structure de bâtiment selon l'une quelconque des revendications précédentes, dans lequel lesdits granulés (2) sont appliqués lors de la fabrication dudit parement par la pression ou le calandrage desdits granulés sur une surface chaude de ladite membrane bitumineuse si bien que lesdits granulés (2) sont intégrés d'une certaine mesure dans ladite membrane bitumineuse.

7. Parement d'une structure de bâtiment selon l'une quelconque des revendications précédentes, dans lequel lesdits granulés (2) sont recouverts de l'huile de silicone si bien qu'une adhérence ou un attachement dudit granulé (2) sur ou dans ladite première couche (3) est amélioré(e).

8. Parement d'une structure de bâtiment selon l'une quelconque des revendications précédentes, dans lequel ledit parement est pourvu d'environ 1 à 2 kg granulés (2) par m² plan dudit parement.

9. Parement d'une structure de bâtiment selon l'une quelconque des revendications précédentes, dans lequel un diamètre moyen, ou tamisage, de chacun desdits granulés (2) est compris entre environ 0,3 et 1,6 mm, et préférablement compris entre 0,8 et 1,2 mm.

10. Procédé de dépollution d'air, comprenant l'application d'un parement selon l'une quelconque des revendications précédentes.
